# EUROPÄISCHE PATENTSCHRIFT

(11) **EP 1 106 288 B1**
(45) Veröffentlichungstag und Bekanntmachung des Hinweises auf die Patenterteilung: **21.08.2002**
(21) Anmeldenummer: 00124003.5
(22) Anmeldetag: 04.11.2000
(51) Int. Cl.: B23B 31/02

(54) **Spannfutter zum Spannen von Werkzeugen durch Schrumpfsitz**
Clamping chuck for clamping tools by shrink fit
Mandrin de serrage destiné au serrage d'outils par blocage par retrait

(30) Priorität: 30.11.1999 DE 19958832
(43) Veröffentlichungstag der Anmeldung: 13.06.2001
(73) Patentinhaber: Bilz Werkzeugfabrik GmbH & Co. KG, 73760 Ostfildern (DE)
(72) Erfinder: Voss, Michael, 71229 Leonberg (DE); Steudte, Hans-Rüdiger, 73770 Denkendorf (DE)
(74) Vertreter: Kratzsch, Volkhard, Dipl.-Ing.

(56) Entgegenhaltungen:
- WO-A-00/71286
- PATENT ABSTRACTS OF JAPAN vol. 012, no. 208 (M-709), 15. Juni 1988 (1988-06-15) & JP 63 011242 A (TECH RES ASSOC HIGHLY RELIAB MARINE PROPUL PLANT), 18. Januar 1988 (1988-01-18)

## Beschreibung

Die Erfindung bezieht sich auf ein Spannfutter zum Spannen von Werkzeugen durch Schrumpfsitz der im Oberbegriff des Anspruchs 1 genannten Art (siehe JP-A-63 011242).

Weitere Spannfutter sind bekannt (US-PS 53 11 654, EP 382 079B1). Diese Spannfutter versagen dann, wenn solche Werkzeuge durch Schrumpfsitz gespannt werden sollen, die zusätzlich zur Radialspannung im Bereich des Werkzeugschaftes zur Herbeiführung einer Drehmomentübertragung auch noch einer axialen Abstützung, z. B. axialen Plananlage, am Spannfutter bedürfen. Dies ist z. B. bei bestimmten Arten von Fräsern, Bohrern od. dgl. Werkzeugen der Fall, z. B. bei besonders gestalteten Fräserschneidköpfen. Diese weisen rückseitig des Werkzeugkopfes eine Schulter auf, die zu einer Axialabstützung geeignet wäre. Bei bekannten Spannfuttern genannter Art ist eine solche rückseitige Plananlage jedoch nur während des im erwärmten Zustand durchgeführten Fügevorgangs vorhanden; denn beim Abkühlen zieht sich der Futterkörper nicht nur radial sondern auch axial zusammen, so dass eine rückseitige Schulter des Werkzeuges keine Plananlage und Axialabstützung erfährt. Daraus ergeben sich dann beim bestimmungsgemäßen Gebrauch Nachteile, z. B. unzulängliche Steifigkeit des Futterkörpers mit eingespanntem Werkzeug, geringe Rundlaufgenauigkeit des Werkzeugs, Schwingungsanfälligkeit und relativ geringe Standzeit des Werkzeugs.

Der Erfindung liegt die Aufgabe zugrunde, ein Spannfutter des eingangs genannten Art zu schaffen, das eine sichere Plananlage des Werkzeugs am Futterkörper gewährleistet.

Die Aufgabe ist bei einem Spannfutter der eingangs genannten Art gemäß der Erfindung durch die Merkmale im Anspruch 1 gelöst.Dadurch ist es ermöglicht,mittels des außen am Futterkörper angeordneten Ringelements ein axiales Verspannen des eingesetzten Werkzeuges dergestalt zu verwirklichen, dass das Werkzeug mit seiner rückseitigen Schulter an der zugeordneten Anschlagfläche des Ringelements anschlägt, welches zwischen dem Futterkörper und dem Werkzeug axial verspannt ist. Auf diese Weise ergibt sich eine sichere Plananlage für das Werkzeug am Futterkörper, wodurch die Steifigkeit des Futterkörpers mitsamt dem eingesetzten Werkzeug erhöht wird, die Rundlaufgenauigkeit des Werkzeugs verbessert wird, die Schwingungsanfälligkeit des Systems verringert wird und letztlich die Standzeit des Werkzeugs deutlich verbessert wird. Hinsichtlich des Ringelements geht die Erfindung von der Überlegung aus, dass dieses zunächst beim Einstecken des Werkzeuges und Anschlagen dieses mit der rückseitigen Schulter an der Anlagefläche des Futterkörpers außer Funktion ist und erst aktiviert wird, wenn durch Abkühlung und Schrumpfen des Längenabschnitts des Futterkörpers der Werkzeugschaft in der Aufnahme radial festgespannt ist, wobei sich aufgrund auch axialer Schrumpfung des Längenabschnitts ein axialer Spalt zwischen der rückseitigen Schulter des Werkzeugs und der stirnseitigen Anlagefläche des Futterkörpers ergibt. Dann wird das Ringelement aktiviert, z. B. durch entsprechende Beaufschlagung mit mechanischen Kräften zur rückseitigen Schulter des Werkzeuges hin bewegt, bis das Ringelement mit seiner Anschlagfläche an der rückseitigen Schulter des Werkzeuges anschlägt und das Werkzeug auf diese Weise axial verspannt ist. Mit besonderem Vorteil wird diese Bewegung des Ringelements bei der Gestaltung als Schrumpfring durch entsprechende Kegelstumpfflächen des Futterkörpers einerseits und des Ringelements andererseits herbeigeführt, die sich jeweils zum Ende des Futterkörpers, d. h. zu dessen Anlagefläche bzw. zur Anschlagfläche des Ringelements hin, verjüngen. Das Spannfutter gemäß der Erfindung ist einfach, leicht und kostengünstig. Es besteht lediglich aus zwei Bauteilen, nämlich dem einstückigen Futterkörper einerseits und dem Ringelement andererseits.

Schrumpfverbindungen sind zum Verbinden zweier koaxialer Bauteile an sich bekannt (PATENT ABSTRACTS OF JAPAN vol. 012, no.208 (M-709), 15. Juni 1988 (1988-06-15) & JP 63 011242 A (TECH RES ASSOC HIGHLY RELIAB MARINE PROPUL PLANT), 18. Januar 1988 (1988-01-18)). Hierbei weist ein zylindrisches Bauteil einen abgestuften zylindrischen Absatz auf, auf den eine zylindrische Schrumpfhülse aufgesetzt ist.Das andere damit zu verbindende zylindrische, dazu koaxial verlaufende Bauteil weist eine dem Außendurchmesser der Schrumpfhülse entsprechende, zu einem Axialende hin offene zylindrische Bohrung auf, in der das die Schrumpfhülse tragende Bauteil aufnehmbar ist. Die Schrumpfhülse weist einen Wärmeausdehnungskoeffizienten auf, der größer ist als derjenige der beiden in dieser Weise durch Schrumpfen miteinander zu verbindenden Bauteile.

Vorteilhafte Ausgestaltungen des Erfindungsgegenstandes ergeben sich aus den Unteransprüchen.

Die Erfindung ist nachfolgend anhand eines in den Zeichnungen gezeigten Ausführungsbeispieles näher erläutert. Es zeigen:
- Fig. 1: eine schematische Seitenansicht mit teilweisem axialen Längsschnitt eines Spannfutters mit bereits eingesetztem Werkzeug in einer Phase während des Spannvorganges durch Schrumpfen,
- Fig. 2: eine schematische Seitenansicht mit teilweise axialem Längsschnitt des Spannfutters in Fig. 1 im vollendeten Spannzustand.

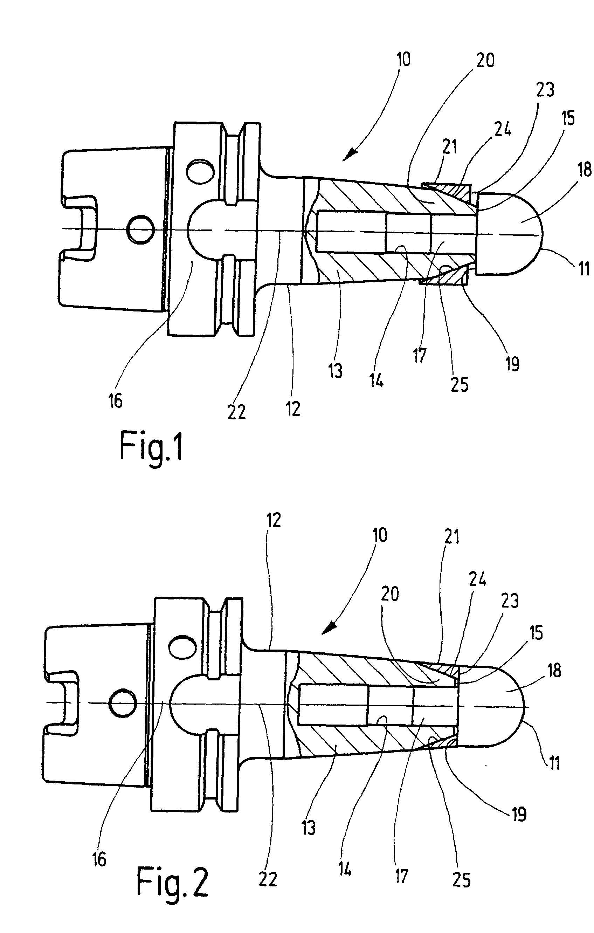

In Fig. 1 und 2 ist ein Spannfutter 10 zum Spannen von Werkzeugen 11 durch Schrumpfsitz schematisch dargestellt. Das Spannfutter 10 weist einen Futterkörper 12 auf, der einen Längenabschnitt 13 mit einer zu einem in Fig. 1 und 2 rechts befindlichen Ende hin offenen zentralen Aufnahme 14 hat, die zum in den Zeichnungen rechten Ende hin zu einer dortigen stirnseitigen Anlagefläche 15 ausmündet. Der Futterkörper 12 weist anschließend an den Längenabschnitt 13 einen Endbereich 16 auf, der für die Erfindung nicht weiter bedeutsam ist und beliebig gestaltet sein kann. Mit diesem Endbereich 16 ist das Spannfutter 10, insbesondere der einstückige Futterkörper 12, in bekannter Weise z. B. in eine Arbeitsspindel einer Werkzeugmaschine einsetzbar. Der Endbereich 16 kann abweichend von der Darstellung auch anders gestaltet sein je nach den Gegebenheiten der Aufnahme bzw. Einspannung für den Futterkörper 12. Der Endbereich 16 kann z. B. auch als einfacher Schaft gestaltet sein, der Teil eines Spannfutters ist oder mit dem Futterkörper 12 seinerseits in ein Spannfutter lösbar einsetzbar ist, das in der Arbeitsspindel einer Werkzeugmaschine aufnehmbar ist.

Die bis zur planen Anlagefläche 15 reichende innere Aufnahme 14 dient zum Einstecken und Aufnehmen des im Futterkörper 12 zu spannenden Werkzeuges 11 mit dessen zylindrischem Schaft 17. Das Werkzeug 11 ist prinzipiell beliebig. Es besteht z. B. aus einem Fräser oder Bohrer, wobei in beiden Fällen der zylindrische Schaft 17 eine relativ kleine axiale Länge aufweist. Das Werkzeug 11 hat dort, wo der Schaft 17 in den Werkzeugkopf 18 übergeht, eine rückseitige axiale Schulter 19, mit der das Werkzeug 11 beim Einstecken in die Aufnahme 14 an der Anlagefläche 15 axial anschlagen kann, wie dies in Fig. 1 gezeigt ist.

Der Futterkörper 12 stellt ein einstückiges Gebilde dar. Im Bereich eines in Fig. 1 und 2 rechts befindlichen Endabschnitts 20 des Futterkörpers 12, insbesondere des Längenabschnitts 13, ist ein Ringelement 21 als zweites Bauteil des Spannfutters 10 angeordnet. Dieses Ringelement 21 ist in einer Axialrichtung, und zwar in der in Fig. 1 und 2 nach links weisenden Axialrichtung, am Futterkörper 12, insbesondere am Endabschnitt 20, axial abstützbar und weist vorn an dem Stirnende, das der Anlagefläche 15 axial benachbart ist, eine plane, wie die Anlagefläche 15 rechtwinklig zur Achse 22 des Futterkörpers 12 gerichtete Anschlagfläche 23 auf. Diese Anschlagfläche 23 ist der Schulter 19 des Werkzeuges 11 zugeordnet und dient dazu, das entsprechend Fig. 1 eingesetzte Werkzeug 11 mittels des Ringelements 21 in Bezug auf den Futterkörper 12 axial zu verspannen. Diesen Zustand zeigt Fig. 2.

Der Endabschnitt 20 des Futterkörpers 12 weist eine Kegelstumpffläche 24 auf, die sich nach vorn zur Anlagefläche 15 hin verjüngt und zur axialen Abstützung des Ringelements 21 dient. Das Ringelement 21 weist ebenfalls eine Kegelstumpffläche 25 auf, die sich in Fig. 1 und 2 nach links zum Endabschnitt 20 hin erweitert bzw. zur Anschlagfläche 23 verjüngt und die zur axialen Abstützung des Ringelements 21 am Futterkörper 12, d. h. zur rückseitigen Abstützung, dient.

Die Kegelstumpffläche 24 des Endabschnitts 20 und die Kegelstumpffläche 25 des Ringelements 21 weisen gleich große Winkel auf, wobei der Winkel größer ist als der Selbsthemmungswinkel. Ersichtlich ist der Winkel der Kegelstumpfflächen 24, 25 jedoch sehr flach. Dieser Winkel ist derart gewählt, dass eine Bewegung des Ringelements 21 entlang der Kegelstumpffläche 24 des Endabschnitts 20 axial übersetzt ist. Der Winkel der jeweiligen Kegelstumpffläche 24, 25 beträgt z. B. etwa 10° bis 20°, insbesondere etwa 15°.

Wie aus Fig. 1 und 2 ersichtlich ist, erstreckt sich die Kegelstumpffläche 25 des Ringelements 21 axial von dessen Anschlagfläche 23 ausgehend bis hin zu dessen anderem axialen Ende. Die Kegelstumpffläche 24 des Endabschnittes 20 des Futterkörpers 12 erstreckt sich axial bis zur Anlagefläche 15. Das Ringelement 21 sitzt mit seiner Kegelstumpffläche 25 auf der Kegelstumpffläche 24 des Endabschnitts 20 des Futterkörpers 12 auf.

Das Ringelement 21 ist aus einem zumindest in Radialrichtung vergrößerbaren und verkleinerbaren, insbesondere aufweitbaren und verengbaren, Ring gebildet, wobei dies mit besonderem Vorteilein Schrumpfring ist. Dabei besteht das Ringelement 21 aus einem Material mit einem größeren Wärmeausdehnungskoeffizienten als demjenigen des Materials, aus dem zumindest der die Aufnahme 14 enthaltende Längenabschnitt 13 des Futterkörpers 12 gebildet ist. Das Ringelement 21 ist mit Vorteil z. B. aus Aluminium gebildet. Auch austenitischer Stahl kann für das Ringelement 21 infrage kommen. Zumindest der die Aufnahme 14 enthaltende Längenabschnitt 13 des Futterkörpers 12 ist aus Stahl gebildet, z. B. Warmarbeitsstahl.

Die Anordnung ist bei dem Spannfutter 10 so getroffen, dass bei Erwärmung zur Einleitung der Schrumpfbefestigung des Werkzeuges 11 das Ringelement 21 sich stärker radial aufweitet als der Längenabschnitt 13. Dabei bewegt sich das Ringelement 21 aufgrund der inneren Kegelstumpffläche 25 entlang der Kegelstumpffläche 24 des Endabschnitts 20 axial nach hinten und mit seiner Anschlagfläche 23 weg von der Anlagefläche 15. Ein in diesem Stadium eingebrachtes Werkzeug 11 kann hierbei mit der rückseitigen Schulter 19 an der Anlagefläche 15 unter Begrenzung der Einstecktiefe des Schaftes 17 in die Aufnahme 14 anschlagen. In dieser Phase, die Fig. 1 zeigt, liegt das Werkzeug 11 mit seiner Schulter 19 an der stirnseitigen Anlagefläche 15 des Futterkörpers 12 an.

Bei anschließender Abkühlung, vorzugsweise z. B. des vom Ringelement 21 freien Teils des Längenabschnitts 13, schrumpft der Längenabschnitt 13 unter radialem Spannen des Schaftes 17 in der Aufnahme 14 zuerst, so dass durch die Schrumpfbefestigung das Werkzeug 11 radial und auch axial fest am Futterkörper 12, insbesondere Längenabschnitt 13, gehalten ist. Beim Abkühlen zieht sich der Futterkörper 12, insbesondere dessen Längenabschnitt 13, aber auch in axialer Richtung zusammen, was dazu führt, dass ein Spalt zwischen der Anlage 15 und der Schulter 19 des Werkzeuges 11 entsteht, der in Fig. 2 der besseren Verdeutlichung wegen relativ groß gezeichnet ist, tatsächlich jedoch erheblich kleinere axiale Abmessungen hat. Aufgrund dieses Spaltes wäre keine axiale Anlage der Schulter 19 des Werkzeuges 11 am Futterkörper 12 und damit keine sichere Plananlage in diesem Bereich gegeben, die jedoch aus Steifigkeitsgründen zusätzlich zur Radialspannung zum Zwecke der Drehmomentübertragung bei vielen Werkzeugen genannter Art notwendig ist.

Beim erfindungsgemäßen Spannfutter ergibt sich trotz des beschriebenen axialen Spaltes eine sichere Plananlage des Werkzeuges 11 dadurch, dass beim Abkühlen das Ringelement 21 beim Schrumpfen mit seiner Kegelstumpffläche 25 entlang der Kegelstumpffläche 24 des Endabschnitts 20 axial nach vorn wandert, bis das Ringelement 21 mit seiner Anschlagfläche 23 gegen die Schulter 19 des eingespannten Werkzeuges 11 unter axialer Verspannung dieses angepresst ist. Das Ringelement 21 verspannt sich somit axial zwischen dem Längenabschnitt 13, insbesondere Endabschnitt 20, des Futterkörpers 12 einerseits und dem Werkzeug 11 andererseits, wodurch sich bei abgekühltem Werkzeug 11 und abgekühltem Futterkörper 12 eine sichere Plananlage des Werkzeuges 11 mit dessen Schulter 19 am Futterkörper 11 ergibt. Dadurch wird die Steifigkeit der Anordnung Futterkörper 12/Werkzeug 11 erhöht, die Schwingungsanfälligkeit gemindert und damit die Standzeit des Werkzeugs 11 deutlich verbessert. Von Vorteil ist ferner, dass das Ringelement 21 gewissermaßen als axialer Puffer zwischen dem Werkzeug 11 und dem Futterkörper 12 wirksam sein kann. Das Material des Ringelements 21 hat gute Dämpfungseigenschaften, so daß das Ringelement 21 zugleich als Dämpfer wirksam sein kann.

## Patentansprüche

1. Spannfutter zum Spannen von Werkzeugen durch Schrumpfsitz, mit einem Futterkörper (12), der einen Längenabschnitt (13) mit einer zu einem Ende hin offenen zentralen Aufnahme (14) zum Einstecken und Aufnehmen des zu spannenden Werkzeuges (11) mit dessen Schaft (17) aufweist, wobei
der Futterkörper (12) an diesem offenen Ende der Aufnahme (14) eine stirnseitige Anlagefläche (15) für das einzusteckende Werkzeug (11) aufweist, das beim Einstecken mit einer rückseitigen Schulter (19) an der Anlagefläche (15) axial anschlagen kann, **dadurch gekennzeichnet, dass** im Bereich eines die Anlagefläche (15) tragenden Endabschnitts (20)außen am Futterkörper (12) ein Ringelement (21) angeordnet ist, das in einer Axialrichtung am Futterkörper (12) axial abstützbar ist und vorn am der Anlagefläche (15) axial benachbarten Stirnende eine der Schulter (19) des Werkzeuges (11) zugeordnete Anschlagfläche (23) zum axialen Verspannen eines eingesetzten Werkzeuges (11) mittels des Ringelementes (21) in Bezug auf den Futterkörper (12) aufweist.

2. Spannfutter nach Anspruch 1,
**dadurch gekennzeichnet,**
**dass** der Endabschnitt (20) des Futterkörpers (12) eine sich nach vorn zur Anlagefläche (15) hin verjüngende Kegelstumpffläche (24) zur axialen Abstützung des Ringelements (21) aufweist.

3. Spannfutter nach Anspruch 1 oder 2,
**dadurch gekennzeichnet,**
**dass** das Ringelement (21) eine sich zum Endabschnitt (20) hin erweiternde Kegelstumpffläche (25) zur axialen Abstützung am Futterkörper (12), insbesondere dessen Kegelstumpffläche (24), aufweist.

4. Spannfutter nach Anspruch 2 oder 3,
**dadurch gekennzeichnet,**
**dass** die Kegelstumpffläche (24) des Endabschnitts (20) und die Kegelstumpffläche (25) des Ringelements (21) gleich große Winkel aufweisen, wobei der Winkel größer ist als der Selbsthemmungswinkel.

5. Spannfutter nach einem der Ansprüche 2 bis 4,
**dadurch gekennzeichnet,**
**dass** der Winkel der jeweiligen Kegelstumpffläche (24, 25) derart gewählt ist, dass eine Bewegung des Ringelements (21) entlang der Kegelstumpffläche (24) des Endabschnitts (20) axial übersetzt ist.

6. Spannfutter nach einem der Ansprüche 2 bis 5,
**dadurch gekennzeichnet,**
**dass** der Winkel der jeweiligen Kegelstumpffläche (24, 25) etwa 10° bis 20°, insbesondere etwa 15°, beträgt.

7. Spannfutter nach einem der Ansprüche 2 bis 6,
**dadurch gekennzeichnet,**
**dass** die Kegelstumpffläche (25) des Ringelements (21) sich axial von dessen Anschlagfläche (23) bis hin zu dessen anderem axialen Ende erstreckt.

8. Spannfutter nach einem der Ansprüche 2 bis 7,
**dadurch gekennzeichnet,**
**dass** die Kegelstumpffläche (24) des Endabschnitts (20) des Futterkörpers (12) sich axial bis zu dessen Anlagefläche (15) erstreckt.

9. Spannfutter nach einem der Ansprüche 1 bis 8,
**dadurch gekennzeichnet,**
**dass** das Ringelement (21) mit seiner Kegelstumpffläche (25) auf der Kegelstumpffläche (24) des Endabschnitts (20) des Futterkörpers (12) aufsitzt.

10. Spannfutter nach einem der Ansprüche 1 bis 9,
**dadurch gekennzeichnet,**
**dass** das Ringelement (21) aus einem zumindest in Radialrichtung vergrößerbaren und verkleinerbaren, insbesondere aufweitbaren und verengbaren, Ring gebildet ist.

11. Spannfutter nach einem der Ansprüche 1 bis 10,
**dadurch gekennzeichnet,**
**dass** das Ringelement (21) aus einem Schrumpfring gebildet ist.

12. Spannfutter nach einem der Ansprüche 1 bis 11,
**dadurch gekennzeichnet,**
**dass** das Ringelement (21) aus einem Material mit einem größeren Wärmeausdehnungskoeffizienten als demjenigen des Materials besteht, aus dem zumindest der die Aufnahme (14) enthaltende Längenabschnitt (13) des Futterkörpers (12) gebildet ist.

13. Spannfutter nach einem der Ansprüche 1 - 12,
**dadurch gekennzeichnet,**
**dass** das Ringelement (21) aus Aluminium gebildet ist.

14. Spannfutter nach einem der Ansprüche 1 bis 12,
**dadurch gekennzeichnet,**
**dass** das Ringelement (21) aus austenitischem Stahl gebildet ist.

15. Spannfutter nach einem der Ansprüche 1 bis 14,
**dadurch gekennzeichnet,**
**dass** zumindest der die Aufnahme (14) enthaltende Längenabschnitt (13) des Futterkörpers (12) aus Stahl gebildet ist.

16. Spannfutter nach einem der Ansprüche 1 bis 15,
**dadurch gekennzeichnet,**
**dass** bei Erwärmung das Ringelement (21) sich stärker als der Längenabschnitt (13) radial aufweitet und entlang der Kegelstumpffläche (24) des Endabschnitts (20) axial nach hinten und mit seiner Anschlagfläche (23) weg von der für den Axialanschlag eines einzusteckenden Werkzeuges (11) freiwerdenden Anlagefläche (15) bewegbar ist.

17. Spannfutter nach einem der Ansprüche 1 bis 16,
**dadurch gekennzeichnet,**
**dass** bei Abkühlung, vorzugsweise des vom Ringelement (21) freien Teils des Längenabschnitts (13), der Längenabschnitt (13) unter radialem Spannen des Werkzeugschaftes (17) in der Aufnahme (14) zuerst schrumpft und das Ringelement (21) beim Schrumpfen entlang der Kegelstumpffläche (24) des Endabschnitts (20) axial nach vorn mit seiner Anschlagfläche (23) gegen die Schulter (19) des eingespannten Werkzeuges (11) unter axialer Verspannung dieses bewegbar ist.

## Claims

1. Chuck for chucking tools by shrink fit, having a chuck body (12) which has a longitudinal section (13) with a central receptacle (14), open towards one end, for the insertion and reception of the tool (11), to be chucked, with its shank (17), the chuck body (12), at this open end of the receptacle (14), having an end bearing face (15) for the tool (11) to be inserted, which tool (11), when being inserted, can axially run against the bearing face (15) with a rear shoulder (19), **characterized in that**, in the region of an end section (20) having the bearing face (15), a ring element (21) is arranged on the outside on the chuck body (12), which ring element (21) can be axially supported in an axial direction on the chuck body (12) and, at the front, at the end axially adjacent to the bearing face (15), has a bearing face (23) which is assigned to the shoulder (19) of the tool (11) and is intended for axially restraining an inserted tool (11) by means of the ring element (21) with respect to the chuck body (12).

2. Chuck according to Claim 1, **characterized in that** the end section (20) of the chuck body (12) has a frustoconical surface (24) narrowing forwards towards the bearing face (15) for axially supporting the ring element (21).

3. Chuck according to Claim 1 or 2, **characterized in that** the ring element (21) has a frustoconical surface (25) widening towards the end section (20) for axially supporting on the chuck body (12), in particular its frustoconical surface (24).

4. Chuck according to Claim 2 or 3, **characterized in that** the frustoconical surface (24) of the end section (20) and the frustoconical surface (25) of the ring element (21) have angles of the same size, the angle being greater than the self-locking angle.

5. Chuck according to one of Claims 2 to 4, **characterized in that** the angle of the respective frustoconical surface (24, 25) is selected in such a way that a movement of the ring element (21) along the frustoconical surface (24) of the end section (20) is axially translated.

6. Chuck according to one of Claims 2 to 5, **characterized in that** the angle of the respective frustoconical surface (24, 25) is about 10° to 20°, in particular about 15°.

7. Chuck according to one of Claims 2 to 6, **characterized in that** the frustoconical surface (25) of the ring element (21) extends axially from its stop face (23) up towards its other axial end.

8. Chuck according to one of Claims 2 to 7, **characterized in that** the frustoconical surface (24) of the end section (20) of the chuck body (12) extends axially up to its bearing face (15).

9. Chuck according to one of Claims 1 to 8, **characterized in that** the ring element (21) sits with its frustoconical surface (25) on the frustoconical surface (24) of the end section (20) of the chuck body (12).

10. Chuck according to one of Claims 1 to 9, **characterized in that** the ring element (21) is formed from a ring which can be enlarged and made smaller, in particular widened and narrowed, at least in the radial direction.

11. Chuck according to one of Claims 1 to 10, **characterized in that** the ring element (21) is formed from a shrink ring.

12. Chuck according to one of Claims 1 to 11, **characterized in that** the ring element (21) is made of a material having a larger coefficient of thermal expansion than that of the material from which at least the longitudinal section (13), containing the receptacle (14), of the chuck body (12) is formed.

13. Chuck according to one of Claims 1-12, **characterized in that** the ring element (21) is formed from aluminium.

14. Chuck according to one of Claims 1 to 12, **characterized in that** the ring element (21) is formed from austenitic steel.

15. Chuck according to one of Claims 1 to 14, **characterized in that** at least the longitudinal section (13), containing the receptacle (14), of the chuck body (12) is formed from steel.

16. Chuck according to one of Claims 1 to 15, **characterized in that**, during heating, the ring element (21) widens radially to a greater extent than the longitudinal section (13) and can be moved along the frustoconical surface (24) of the end section (20) axially rearwards and, with its bearing face (23), away from the bearing face (15) being released for the axial stop of a tool (11) to be inserted.

17. Chuck according to one of Claims 1 to 16, **characterized in that**, during cooling, preferably of that part of the longitudinal section (13) which is free of the ring element (21), the longitudinal section (13) first of all shrinks, with the tool shank (17) being clamped radially in the receptacle (14), and the ring element (21), during the shrinkage, can be moved along the frustoconical surface (24) of the end section (20) axially forwards with its stop face (23) against the shoulder (19) of the clamped tool (11), with the latter being axially restrained.

## Revendications

1. Mandrin pour le serrage d'outils par ajustement fretté, comprenant un corps de mandrin (12), qui présente une section longitudinale (13) ayant un logement (14) central, ouvert en direction d'une extrémité, pour emmancher et recevoir l'outil à serrer (11) par sa tige (17), le corps de mandrin (12) présentant sur cette extrémité ouverte du logement (14) une surface d'appui (15) du côté frontal pour l'outil (11) à emmancher, qui peut buter axialement lors de l'emmanchement, par un épaulement (19) du côté arrière, sur la surface d'appui (15), **caractérisé en ce qu'**à l'extérieur sur le corps de mandrin (12) dans la zone d'une section extrême (20) supportant la surface d'appui (15) est disposé un élément annulaire (21) qui peut s'appuyer dans un sens axial sur le corps de mandrin (12) et présente à l'avant, sur l'extrémité frontale axialement voisine de la surface d'appui (15), une surface de butée (23) associée à l'épaulement (19) de l'outil (11), pour le serrage axial d'un outil monté (11) au moyen de l'élément annulaire (21) par rapport au corps de mandrin (12).

2. Mandrin de serrage suivant la revendication 1, **caractérisé en ce que** la section extrême (20) du corps de mandrin (12) présente une surface tronconique (24) se rétrécissant vers l'avant en direction de la surface d'appui (15), pour l'appui axial de l'élément annulaire (21).

3. Mandrin de serrage suivant l'une des revendications 1 et 2, **caractérisé en ce que** l'élément annulaire (21) présente une surface tronconique (25) s'élargissant en direction de la section extrême (20), pour l'appui axial sur le corps de mandrin (12), en particulier sur la surface tronconique (24) de ce dernier.

4. Mandrin de serrage suivant l'une des revendications 2 et 3, **caractérisé en ce que** la surface tronconique (24) de la section extrême (20) et la surface tronconique (25) de l'élément annulaire (21) présentent des angles de même valeur, l'angle étant supérieur à l'angle de blocage automatique.

5. Mandrin de serrage suivant l'une des revendications 2 à 4, **caractérisé en ce que** l'angle de chaque surface tronconique (24, 25) est choisi de sorte qu'un déplacement de l'élément annulaire (21) le long de la surface tronconique (24) de la section extrême (20) est transmis axialement.

6. Mandrin de serrage suivant l'une des revendications 2 à 5, **caractérisé en ce que** l'angle de chaque surface tronconique (24, 25) est d'environ 10° à 20°, en particulier d'environ 15°.

7. Mandrin de serrage suivant l'une des revendications 2 à 6, **caractérisé en ce que** la surface tronconique (25) de l'élément annulaire (21) s'étend axialement de la surface de butée (23) de ce dernier à son autre extrémité axiale.

8. Mandrin de serrage suivant l'une des revendications 2 à 7, **caractérisé en ce que** la surface tronconique (24) de la section extrême (20) du corps de mandrin (12) s'étend axialement jusqu'à la surface d'appui (15) de ce dernier.

9. Mandrin de serrage suivant l'une des revendications 1 à 8, **caractérisé en ce que** l'élément annulaire (21) repose par sa surface tronconique (25) sur la surface tronconique (24) de la section extrême (20) du corps de mandrin (12).

10. Mandrin de serrage suivant l'une des revendications 1 à 9, **caractérisé en ce que** l'élément annulaire (21) est formé d'une bague pouvant être agrandie et réduite, en particulier élargie et rétrécie, au moins dans la direction radiale.

11. Mandrin de serrage suivant l'une des revendications 1 à 10, **caractérisé en ce que** l'élément annulaire (21) est formé d'une frette.

12. Mandrin de serrage suivant l'une des revendications 1 à 11, **caractérisé en ce que** l'élément annulaire (21) est en un matériau ayant un coefficient de dilatation thermique supérieur à celui du matériau dont est formée au moins la section longitudinale (13) du corps de mandrin (12) contenant le logement (14).

13. Mandrin de serrage suivant l'une des revendications 1 - 12, **caractérisé en ce que** l'élément annulaire (21) est formé d'aluminium.

14. Mandrin de serrage suivant l'une des revendications 1 à 12, **caractérisé en ce que** l'élément annulaire (21) est formé d'acier austénitique.

15. Mandrin de serrage suivant l'une des revendications 1 à 14, **caractérisé en ce qu'**au moins la section longitudinale (13) du corps de mandrin (12) comportant le logement (14) est formée d'acier.

16. Mandrin de serrage suivant l'une des revendications 1 à 15, **caractérisé en ce que**, lors du chauffage, l'élément annulaire (21) s'élargit plus radialement que la section longitudinale (13), et peut se déplacer axialement vers l'arrière le long de la surface tronconique (24) de la section extrême (20), sa surface de butée (23) s'écartant de la surface d'appui (15) libérée pour la butée axiale d'un outil (11) à emmancher.

17. Mandrin de serrage suivant l'une des revendications 1 à 16, **caractérisé en ce que**, lors du refroidissement, de préférence de la partie de la section longitudinale (13) libre de l'élément annulaire (21), la section longitudinale (13) se contracte d'abord avec un serrage radial de la tige d'outil (17) dans le logement (14), et l'élément annulaire (21), lors du retrait, peut se déplacer axialement vers l'avant le long de la surface tronconique (24) de la section extrême (20), avec sa surface de butée (23) contre l'épaulement (19) de l'outil (11) serré, avec serrage axial de ce dernier.
